# EUROPEAN PATENT SPECIFICATION

(11) **EP 3 668 269 B1**
(45) Date of publication and mention of the grant of the patent: **17.06.2026**
(21) Application number: 19306534.9
(22) Date of filing: 29.11.2019
(51) Int. Cl.: H05B 3/04, H05B 3/56

(54) **END CAP ARRANGEMENT FOR SEALING OFF AN END PORTION OF A HEATING CABLE AND METHOD**
ENDKAPPENANORDNUNG ZUM ABDICHTEN EINES ENDABSCHNITTS EINES HEIZKABELS UND VERFAHREN
AGENCEMENT DE CAPUCHON D'EXTRÉMITÉ POUR ÉTANCHÉIFIER UNE PARTIE D'EXTRÉMITÉ D'UN CÂBLE CHAUFFANT ET PROCÉDÉ

(30) Priority: 13.12.2018 NO 20181602
(43) Date of publication of application: 17.06.2020
(73) Proprietor: Nexans, 92400 Courbevoie (FR)
(72) Inventor: JONLI, Odd Magne, 1406 SKI (NO); SKARSTAD, Nils, 1177 OSLO (NO); DZUBUR, Mensudin, 2150 ARNES (NO); YTTRI, Rune, 1177 OSLO (NO)
(74) Representative: Cabinet Boettcher

(56) References cited:
- EP-A1- 0 938 159
- WO-A1-2008/099674
- WO-A1-2011/161840
- DE-A1- 102013 011 448
- DE-A1- 3 928 187
- DE-U1- 29 609 128
- GB-A- 2 195 840
- JP-A- H11 178 142
- US-A1- 2014 326 708

## Description

### FIELD OF THE INVENTION

The present invention relates to an end cap arrangement for sealing off an end portion of a heating cable, and a method for installing an end cap arrangement for sealing off an end portion of a heating cable.

### BACKGROUND OF THE INVENTION

Heating cables for under floor heating purposes are often installed in a challenging environment where the heating cables may be exposed to water, the humidity is high, the pH levels are high, and the temperature may constantly be cycling.

Given these demanding environmental conditions, the heating cables need secure protection to avoid damages during use. A particular vulnerable area of such heating cables is the end portion of a heating cable with plural conductors. At the end portion of the heating cable the plural conductors, for instance two insulated conductors, are electrically connected and then sealed off to protect the end portion from the harsh environment.

Various arrangements for sealing off heating cable end portions are known within the art. In accordance with one known end cap solution, a two layered pressure molding is arranged for covering and sealing off the heating cable end portion.

Another arrangement for providing a watertight construction is shown in EP 0938159 . However, this watertight construction is arranged for spliced wire ends and not heating cable end portions. In EP 0938159 an adhesive agent is employed to fill in the clearances between the wires. A heat shrinkable tube arranged with a hot melt layer is installed around the wire bundle. The heat shrinkable tube is heated for melting the hot melt layer and adhering the wires and the shrinkable tube.

EP0133371 describes an arrangement for joining electrical cables for submersion in water. Blocks made of a fusible component enclose a crimp connector which forms an electrical connection between the cables. A heat shrinkable tube is arranged covering the fusible blocks. The arrangement is heated causing the blocks to melt and the recovery of the heat shrinkable tube thereby closing off the cable joint.

EP1835567 describes the production of a water blocking structure for a shielded electric wire. The water stopping structure is produced by hot melt layered onto a stripped portion of the electric wire and a heat shrinkable tube arranged for covering the hot melt. Heat shrinkage and pressurizing while the heat shrinkage takes place ensures that the adhesive is hardened in a pressurized state.

EP249510 describes a sealing arrangement prepared for preventing water transmission along the cable and suggests a water block with a plurality of passageways, each for receiving wires.

EP2092611 and EP 1571887 also disclose the forming of a wire splice by use of a heat shrinkable tubular and an adhesive. WO2011161840A1 describes a method for installing an end cap arrangement for sealing off an end portion of a cable bundle which is a cable bundle used in electrical architecture for vehicles. This method consisting in heat shrinking a heat shrinkable tube, having one end closed with a plug and the over end open for passage of the end portion of the cable bundle. According to this method, the tube is being heat shrinked while the end portion of the cable bundle together with a hot melt solid waterproofing agent are inside the heat shrinkable tube. This method allows the melted waterproofing agent to fill spaces between the cables of the cable bundle and to provide a waterproofing of the end of the cable bundle inside the heat shrinked tube.

The problem with the prior art solutions as disclosed in the cited publications is that these have been proven hard to produce water tight, partly due to the challenge of obtaining a satisfying filling in the gap between the conductors, but also because of the risk of entrapping air bubbles within the seal off. When air bubbles are entrapped in the seal off, there is a risk of water entrance into the end cap, and air bubbles are hence to be avoided.

The object of the present invention is to provide a water tight end seal off for an end portion of a heating cable, avoiding or alleviating the disadvantages of the prior art solutions. In particular, the object is to provide an end seal off, where the presence of air bubbles is prevented or reduced and where the path for water entering the area of the metal end of the cable is eliminated or at least minimized.

It is further an object of the invention to reduce the number of production rejects that occur during manufacture.

### SUMMARY OF THE INVENTION

The present invention concerns a method of installing an end cap arrangement for sealing off an end portion of a heating cable, as defined in the independent claim. Further additional features are set forth in the dependent claims.

The heating cable end portion comprises at least two conductors that are electrically connected The conductors may be insulated and may have conductor end portions that are bared of the outer sleeve insulation. An end crimp device may typically be attached to the end of the conductors for the establishment of electrical connection. The heating cable end portion may be arranged with an outer sleeve insulation assembly.

In accordance with the present invention the end cap arrangement comprises a heat shrinkable tube having an entrance opening for receiving the heating cable end portion. The heat shrinkable tube also has an outlet opening for evacuation of air. The exposure to a shrinking temperature and to a subsequent pressure force allows the shrinkage and forming of the heat shrinkable tube about the heating cable end portion and the evacuation of air from the outlet opening.

The heat shrinkable tube may comprise an evacuation and seal-off portion having inner surfaces defining a passage for evacuation of air out through the outlet opening. The subsequent pressure force allows the air evacuation and the compression of the evacuation and seal-off portion for closure of the passage and the outlet opening. The compression of the evacuation and seal-off portion may allow the displacement of the inner surfaces of the evacuation and seal-off portion into sealed abutment with each other.

The heat shrinkable tube may comprise a receiving portion arranged with the entrance opening and inner surfaces defining the interior of the receiving portion. The receiving portion may then be prepared for shrinkage from expanded inner diameters d1ₑₓₚ, to original inner diameters during exposure to the shrinking temperature for fitting the receiving portion in engagement with an outer sleeve insulation assembly of the heating cable end portion.

The inner surfaces may be arranged with an holt-melt adhesive layer.

At least one piece of hot melt adhesive may be attached to the conductors.

When exposed to the shrinking temperature this may allow at least one piece of hot melt adhesive into a melted adhesion, and the subsequent pressure force then allows filling gaps in the interior of the heat shrinkable tube with melted adhesion. If the surfaces are provided with the hot melt adhesive layer this also melts into the melted adhesion

The pressure force allows for compression of the heat shrinkable tube to allow the evacuation of air. The passage of the evacuation and seal-off portion may extend from the interior of the receiving portion and air may then be evacuated from the receiving portion interior and through the passage out the outlet opening. The pressure force may further allow melted adhesion to fill gaps in between the conductors and between the conductors and the inner surfaces of the receiving portion of heat shrinkable. The pressure force may also allow the closure of the passage and the outlet opening by displacement of the inner surfaces of the passage of the evacuation and seal-off portion into engagement with each other.

By providing the heat shrinkable tube with the evacuation and seal-off portion, air is advantageously let out the outlet opening due to the pressure force that compresses the heat shrinkable tube while the melted adhesives is not yet solidified. The risk of air bubbles trapped in the completed end cap arrangement is thereby eliminating or at least minimized. Further, the compression of the heat shrinkable tube ensures satisfactory adhesion of the heat shrinkable tube inner surfaces, and ensures a completed end cap arrangement where the interior is filled with melted adhesion that is later to be solidified. The adherence of the inner surfaces of the evacuation and seal-off portion ensures that the heating cable end portion is completely sealed off.

The pressure force may be distributed along the length of the heat shrinkable tube, with a working direction oriented essentially radially onto the heat shrinkable tube. The pressure force may for instance be provided by a pressing tool having upper and lower tool halves arranged for engagement at radially opposite exterior surfaces of the heat shrinkable tube. The pressing tool may alternatively comprise rollers arranged in engagement with the heat shrinkable tube for moving along the length of the of the heat shrinkable tube in order to apply the pressure force.

The heat shrinkable tube may be provided in a shape memory material. A shape memory material is herein defined as a material (for instance a polymer) which has the ability to return from a deformed temporary state to original form when exposed to a set temperature, such as the shrinking temperature. When a tube is manufactured by shape memory material, the tube is typically pretreated by heating and expansion of the original inner diameters to expanded inner diameters, and is prepared for later recovery of the original inner diameters when exposed to a shrinking temperature. The expansion of the original inner diameters may occur by blowing up the heated tube portion to obtain expanded inner diameters.

All of the heat shrinkable tube or just the receiving portion may be pretreated by heating and expansion of the original inner diameters to expanded inner diameters, and is prepared for later recovery of the original inner diameters when exposed to shrinking temperature.

The expanded inner diameters of the receiving portion may be configured for receiving the outer sleeve insulation assembly in the interior of the receiving portion, through the entrance opening. When exposed to the shrinking temperature, the recovery of the original inner diameters is configured to fit the inner surfaces of the receiving portion in engagement with the exterior of the outer sleeve insulation assembly. The engagement between the outer sleeve insulation assembly and the outer sleeve insulation assembly of the heat shrinkable tube, closes the interior of the heat shrinkable tube at one end portion, while the evacuation and seal-off portion which is arranged at the other end portion of the heat shrinkable tube is left open.

As mentioned previously, just the receiving portion may be pretreated by heating and expansion of the original inner diameters to the expanded inner diameters, or both the receiving portion and the evacuation and seal-off portion of the heat shrinkable tube, may have expanded inner diameter as provided by heating and expansion process . When the latter is case also the evacuation and seal-off portion has the ability to return from a deformed temporary state to their original form when exposed to a set temperature, such as the shrinking temperature. The evacuation and seal-off portion, may then be pretreated by heating and expansion of the original inner diameters to expanded inner diameters, and the evacuation and seal-off portion is prepared for recovery of the original inner diameters when exposed to shrinking temperature. The recovery of the original inner diameters may then typically be configured to ensure that the passage is left open for evacuation of air for instance from the receiving portion and out the outlet opening.

When both the receiving portion and the evacuation and seal-off portion are pretreated by heating and expansion of the original diameters to the expanded inner diameters, the heat shrinkable tube may typically have the configuration of a tube member in the initial installment state. The receiving portion may then comprise one end portion of the tube member, and the evacuation and seal-off portion may then comprise the other end portion of the tube member. The expanded inner diameters of the receiving portion and the evacuation and seal-off portion is then essentially uniform.

When just the receiving portion is pretreated by heating and expansion of the original diameters to the expanded inner diameters, the evacuation and seal-off portion of the heat shrinkable tube may be prepared untreated (not exposed to by heating and expansion for providing expanded inner diameters). The inner diameters of the passage of the evacuation and seal-off portion is then left unaffected during exposure to shrinking temperature, while the receiving portion shrinks to original inner diameters. The receiving portion of heat shrinkable tube may then prior to shrinkage typically comprise a first tubular section and the evacuation and seal-off portion comprises a second tubular section. The inner original diameter of the evacuation and seal-off portion may then be arranged smaller than the expanded inner diameter of the receiving portion. The first and second tubular section may be connected by a merging tubular shoulder section with an inner diameter decreasing from the inner diameter of the first tubular section towards the inner diameter of the second tubular section.

The arrangement of the heat shrinkable tube, where the evacuation and seal-off portion of the heat shrinkable tube is prepared untreated, as described above, has the advantage that the axial displacement of the heat shrinkable tube during heat treatment is restricted, and this is especially advantageous when the heat is unevenly supplied. However, both when the evacuation and seal-off portion is pretreated and untreated, a similar configuration of the heat shrinkable tube is produced as a result of the heat treatment; an essentially tubular form where the both the inner and outer diameters decrease when moving from the receiving portion to the evacuation and seal-off portion.

The piece of hot melt adhesive may comprise a body member of hot melt adhesive configured with at least one hot melt adhesive attachment portion for receiving a conductor in an installment position. The hot melt adhesive attachment portion may be installed circumferentially around one of the conductors. In accordance with this embodiment, the hot melt adhesive attachment portion, may comprise inner walls forming a receiving space such as a through opening in the body member configured for receiving the conductor. Further in accordance with this embodiment, the piece of hot melt adhesive may comprise a ring or cylindrical shaped member, and may even have a polygonal configuration with a through hole. Typically one piece of hot melt adhesive may be installed onto each conductor, but it is of course also possible to install plural pieces of hot melt adhesive along the length of the conductor.

The body member may be centrally arranged between at least two hot melt adhesive attachment portions, wherein each of the hot melt adhesive attachment portions is arranged for receiving the respective conductor in the installment position. In accordance with this embodiment, each of the hot melt adhesive attachment portions may comprise inner walls forming a through opening in the body member for receiving a conductor. The body member may have a radial extension configured for radial displacement of the conductors away from each other in the installment position.

The piece of hot melt adhesive may be provided with more than two hot melt adhesive attachment portions, for instance if the heating cable end portion comprise more than two conductors.

The hot melt adhesive attachment portions may be arranged with a slit, typically extending in the axial direction, for facilitating the installment of the piece of hot melt adhesive onto the conductor. The installment is then carried out by inserting the cable radially through the slit and into the hot melt adhesive attachment portions.

In its simplest form the least one piece of hot melt adhesive may comprise a single lump member to be inserted into an installment position in between the conductors. For the installment, the conductors may be radially displaced away from each other and the single lump may be pressed into the gap between the conductors, and thus kept in place due to reactive pressure forces induced by enlargement of gap between the conductors. If needed plural lump members of varying size may be installed or wedged in between the conductors.

Upon the finalization of the shrinkage and forming of the heat shrinkable tube, the interior of the receiving portion has a filling of melted adhesion. The inner surfaces of evacuation and seal-off portion are arranged in sealed abutment with each other. The heat treatment and the compression, ensures that the filling of the interior of the of the receiving portion and sealed closure of the inner surfaces of evacuation and seal-off portion, appears compact and with no paths that are vulnerable for water entrance. The finalized end cap arrangement may then appear with a receiving portion having a flattened tapering configuration such as a conical shape decreasing towards the evacuation and seal-off portion, where the evacuation and seal-off portion projects from the receiving portion with the shape of a lip formation.

The attachment of the least one piece of hot melt adhesive to the conductors provides a water blockage which works as an additional barrier should water enter from the side of the heating cable. The provision of the water blockage ensures the isolation of the conductor end portions that are bared of the outer sleeve insulation assembly. The water blockage comprises the filling of the least one piece of hot melt adhesive in melted form between the gaps of the conductors and between the conductors and the inner surfaces of the receiving portion.

The invention also concerns a method for installing an end cap arrangement for sealing off an end portion of a heating cable which comprises at least two conductors that are electrically connected. The end cap arrangement comprises
- a heat shrinkable tube having an entrance opening, and an outlet opening for evacuation of air.

The method comprises the following steps:
- attaching at least one piece of hot melt adhesive to the conductors,
- inserting the end portion of the heating cable through the entrance opening into the interior of the heat shrinkable tube,
- exposing the heat shrinkable tube to a shrinkage temperature,
applying a subsequent pressure force to the heat shrinkable tube and compressing the heat shrinkable tube thereby
- letting air from the interior of the heat shrinkable tube and out the outlet opening and forming the heat shrinkable tube about the heating cable end portion.

The exposure to the shrinkage temperature and the subsequent pressure force may in addition also ensure the following steps;
- the melting of the least one piece of hot melt adhesive (16) into melted adhesive and filling the melted adhesive into gaps between the conductors and between inner surfaces of the heat shrinkable tube and the conductors,
- closing the outlet opening.

The outlet opening may be closed by displacing the inner surfaces of the passage of the evacuation and seal-off portion into engagement with each other.

These and other characteristics of the invention will be clear from the following description of an exemplary embodiment, given as a non-restrictive example, with reference to the attached drawings.

### DETAILED DESCRIPTION

In the following, embodiments of the present invention will be described in detail with reference to the enclosed drawings, where:
Fig. 1 illustrates schematic set up of a heating cable as installed for under floor heating.
Fig. 2 illustrates a top view of the heating cable end portion to be sealed off.
Fig. 3 illustrates a side view of the end portion of the heating cable end portion as illustrated in fig 2 ..
Fig. 4 illustrates a perspective view of an embodiment of a piece of hot melt adhesive connected to the conductors.
Fig. 5 illustrates a side view of the heating cable end portion installed into a heat shrinkable tube.
Fig. 6 illustrates a side view of an embodiment a heat shrinkable tube.
Fig. 7 illustrates a side view of an alternative embodiment a heat shrinkable tube.
Fig. 8 illustrates heat treatment of the heating cable end portion installed into a heat shrinkable tube as illustrated in fig 5 .
Fig. 9 illustrates heating cable end portion and the heat shrinkable tube as illustrated in fig 5 and 8 , after heat treatment is completed.
Fig. 10 illustrates the exertion of a pressure force on the heated heat shrinkable tube by means of pressing tool.
Fig. 11 illustrates the exertion of a pressure force on the heated heat shrinkable tube by means of an alternative pressing tool.
Fig. 12 illustrates a top view of the final product after completion the pressurization of the heat shrinkable tube.
Fig. 13 illustrates a side view of the final product after completion the pressurization of the heat shrinkable tube.

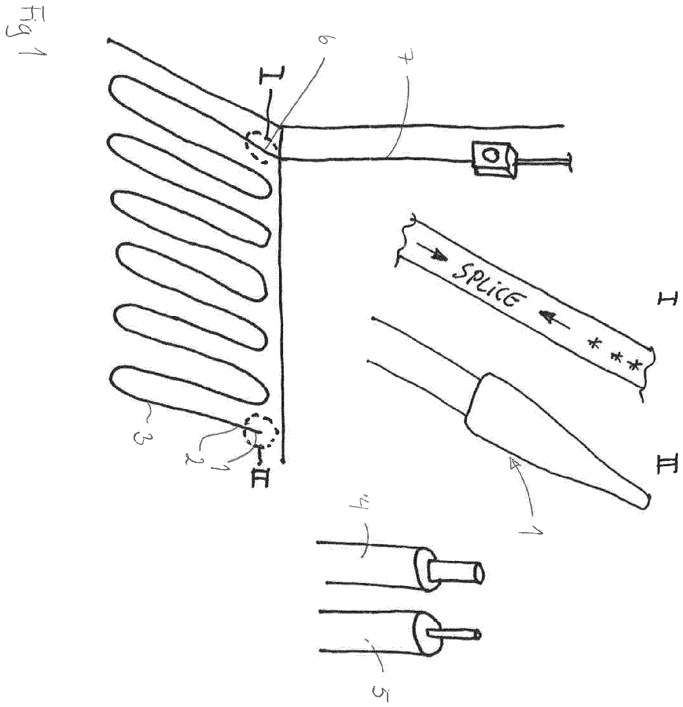

Fig 1 shows a general set up of an end portion 2 of a heating cable 3. The set up shows a heating cable as installed for under floor heating, and shows the end portion 2 of the heating cable 3 where the conductors 4, 5 of the heating cable 3 are electrically connected and sealed off by an end cap arrangement 1. The other end portion 6 of the heating cable 3 is electrically connected to a power cable 7, for instance by a splice as illustrated. This other end portion 7 of the heating cable is not to be described further herein in detail.

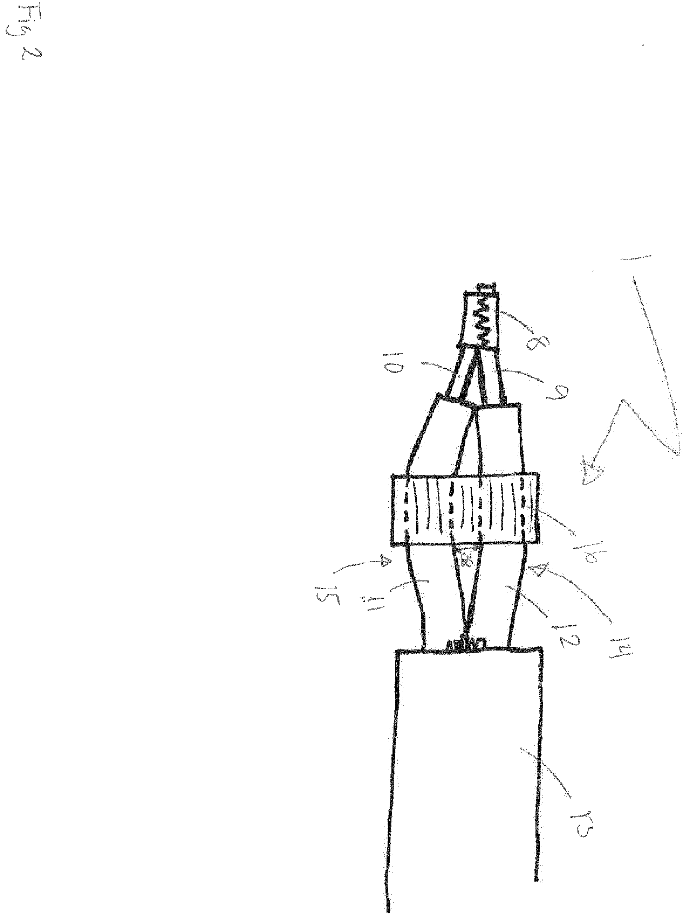

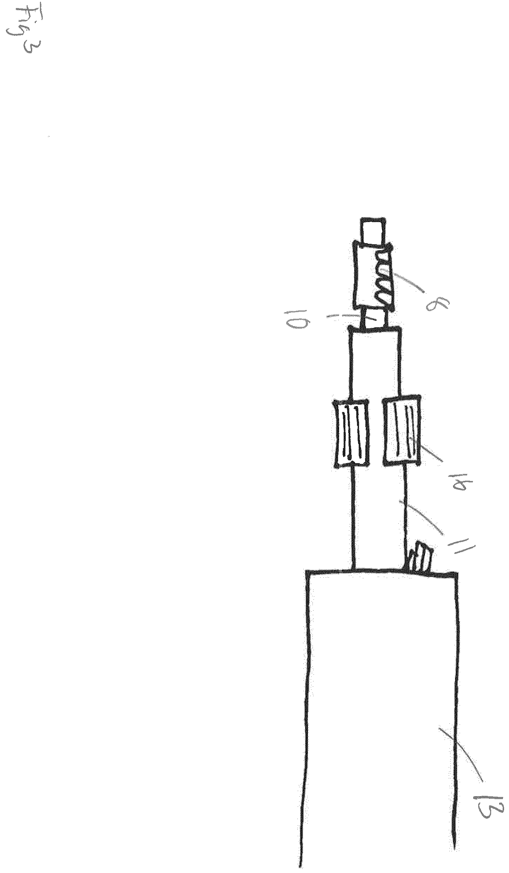

Fig 2 and 3 show the end portion 2 of the heating cable 3 where an outer sleeve insulation assembly 13 covering the conductors along the length of the heating cable, has been removed from the end portions 14, 15 of the conductors 4, 5. The bared tip portions 9, 10 of each of the conductor end portions 14, 15 are stripped of insulation and electrically connected by a crimp element 8. A piece of hot melt adhesive 16 is shown attached to the conductor end portions 14, 15.

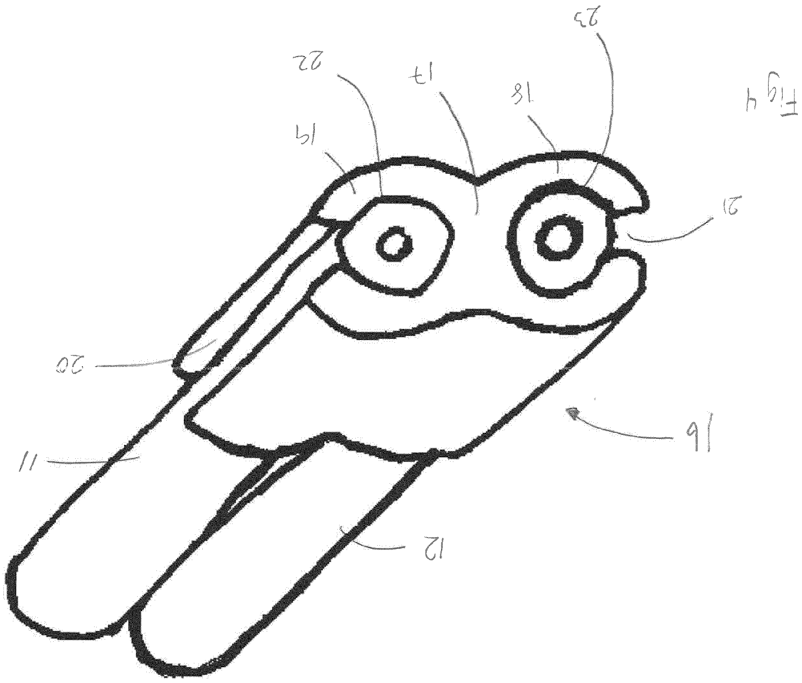

An embodiment of the piece of hot melt adhesive 16 is shown in fig. 4 . The piece of hot melt adhesive 16 as shown in fig. 4 is configured with two hot melt adhesive attachment portions 18, 19 each for installment around the conductor end portions 14, 15. The attachment portions 18, 19 are each shown with ring shaped or cylindrical slitted configuration defining receiving spaces 22, 23 for the conductor end portions 11, 12. The slits 20,21 are configured extending in the axial direction of the hot melt adhesive 16 to ease the installation of the piece of hot melt adhesive 16 by insert of the conductor end portions 14, 15 through the slits 20,21. The piece of hot melt adhesive 16 comprises a centrally arranged body member 17 of hot melt adhesive that has a radial extension corresponding to the radial distance between the receiving spaces 22, 23. When installing the piece of hot melt adhesive 16 as illustrated in figs 2- 3, the radial extension of the centrally arranged body member 17 may typically be set to cause radial displacement of the conductors away from each other in installed position. In other embodiments the piece of hot melt adhesive 16 (not shown) may comprise one or several single attachment members, which may be slitted, each arranged for circumferential installment around one of the conductors. The piece of hot melt adhesive 16 may alternatively also comprise a simple lump member inserted into installation position by radially displacing the conductor end portions 14, 15 away from each other.

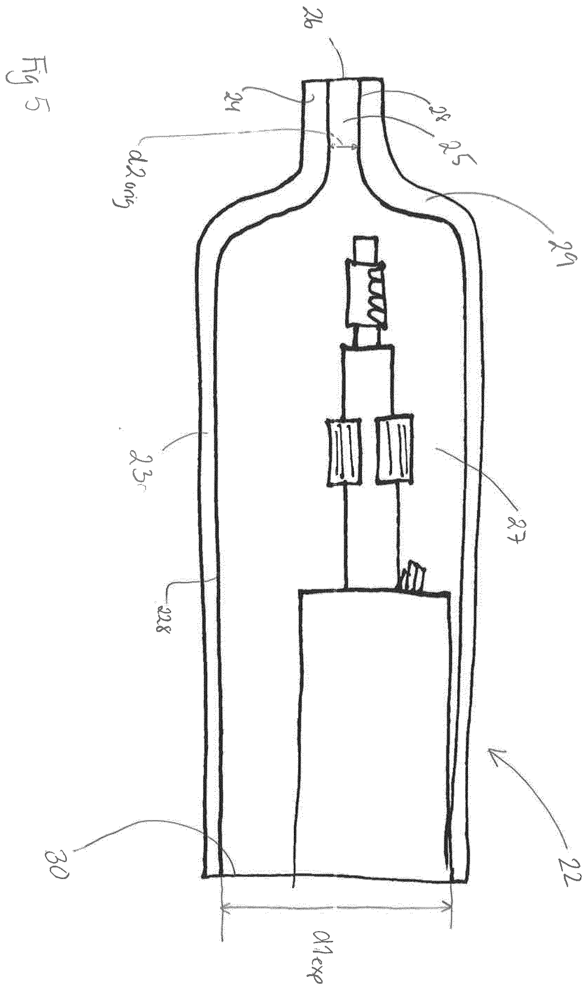

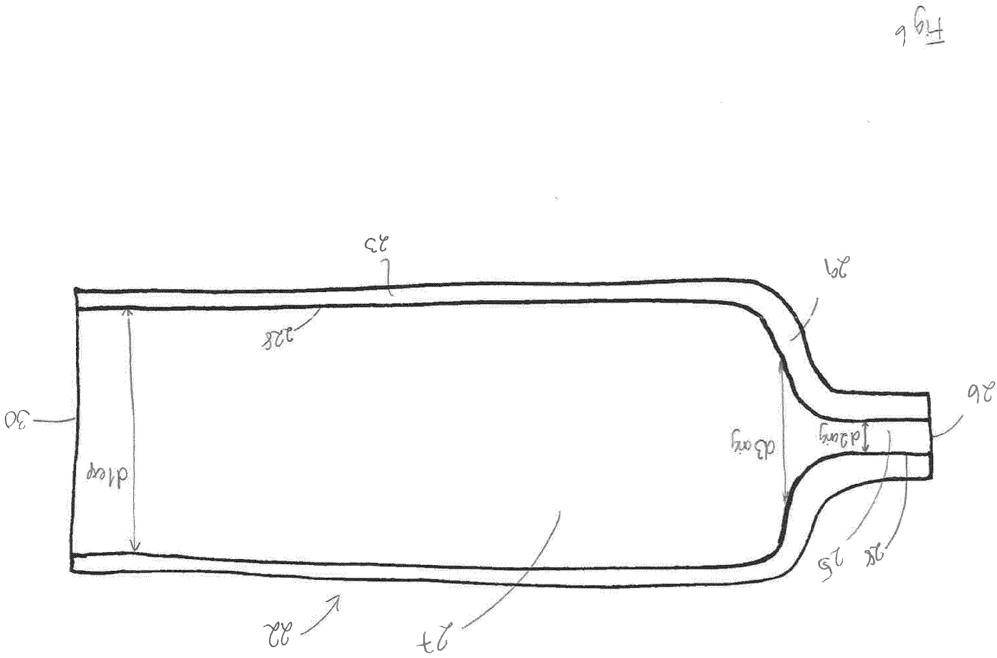

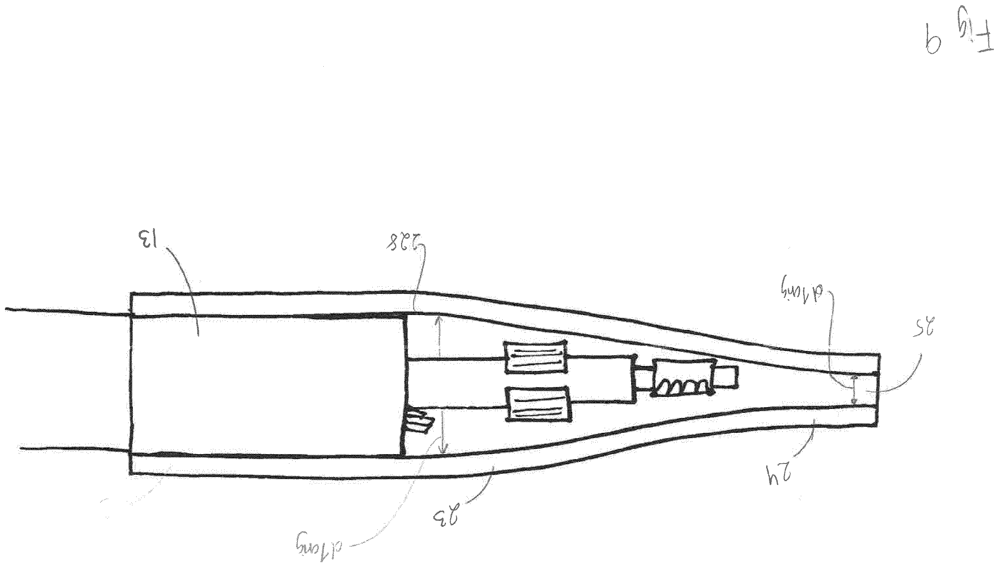

The heating cable end portion 1 is inserted through an entrance opening 30 and into the interior of a heat shrinkable tube 22 in an initial installment state as shown in fig. 5 . The heat shrinkable tube 22 has a receiving portion 23 that has been pretreated by heating and expanding the original inner diameter of the receiving portion 23, and the heating cable end portion 1 is accommodated in the interior 27 of the receiving portion 23. Fig. 5 and fig 6 , show the receiving portion 23 with an interior 27 and an expanded inner receiving portion diameter dₑₓₚ, which will recover to an original inner receiving portion diameter dₑₓₚ (see fig 9 when exposed to a set shrinking temperature tₛₕᵣᵢₙₖ.)

The heat shrinkable tube 22 also has an evacuation and seal-off portion 24 which is configured with a passage for evacuation of air from the interior of the receiving portion out through an outlet opening 26. Different from the receiving portion 23, the evacuation and seal-off portion 24 has not been pretreated and the passage 25 is configured with an original inner diameter d_{orig} in the initial installment state as shown in fig. 5 . The evacuation and seal-off portion 24 also comprises a shoulder section 29 provided as a transitional section from the tubular shaped receiving portion, here shown as a first tubular section, to the smaller diameter tubular shaped evacuation and seal-off portion 24, here shown as a second tubular section.

The inner surfaces 228 which define the interior of the receiving portion 23 and the inner surfaces 28 which define evacuation and seal-off portion 24 is arranged with a holt-melt adhesive layer.

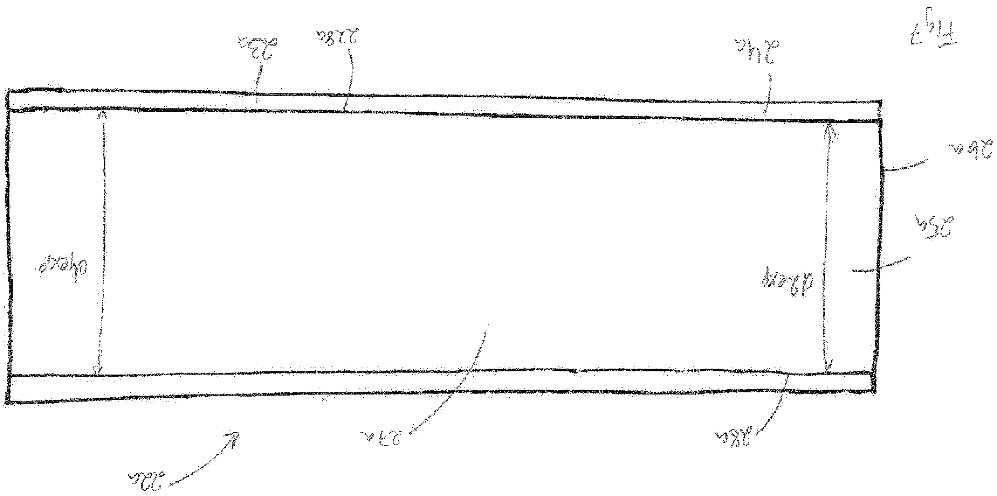

Fig 7 shows an alternative embodiment of the heat shrinkable tube 22a comprising a tubular section in an initial installment state. The receiving portion 23a and the evacuation and seal-off portion 24 are both pretreated by heating and expansion of the original inner diameters into expanded inner diameters. The inner expanded diameters dexp of the receiving portion interior 27a are essentially uniform when moving axially along the length of the heat shrinkable tube 22.

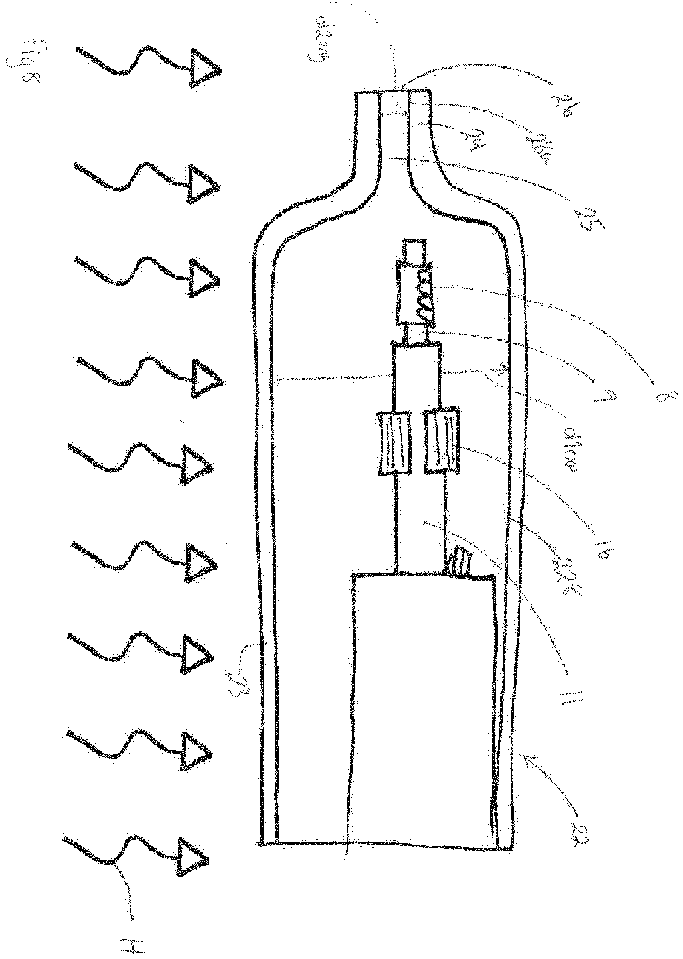

In the initial installment state, as shown in fig 8, the heating cable end portion 2 extends axially along the length of the interior of the receiving portion 23 of the heat shrinkable tube 22. The conductor ends 11, 12 projecting from the outer sleeve insulation assembly 13 is positioned to leave the passage 25 of the evacuation and seal-off portion 24 void. Fig 8 shows the heat shrinkable tube with the bottle shape embodiment as illustrated in figs 5 and fig 6 , but also when the heating cable end portion 2 is positioned in the interior of the heat shrinkable tube as illustrated in fig 7 , the interior of the evacuation and seal-off portion 24 is left void. The heat shrinkable tube 22 with heating cable end portion 2 installed, is further arranged to be brought from the initial installment state to a complete installment state by exposure to heat treatment and a pressing procedure, as to be described in the following;

By exposure to heat treatment as illustrated by arrows H in fig 8 , a shrinking temperature tₛₕᵣᵢₙₖ is provided for allowing the inner expanded diameters dₑₓₚ of the receiving portion 23 into a recovery state, restoring the original inner diameters d_{orig} of the receiving portion 23. Fig 9 shows the restorage of these original inner diameters d_{orig} of the receiving portion. The shrinkage of the receiving portion 23 to the original inner diameters d_{orig} , ensures that the inner surfaces 228 of the receiving portion 23 fit in engagement with exterior of the outer sleeve insulation assembly 13. As the evacuation and seal-off portion 24 has not been exposed to pre-treatment, the heat treatment H of the heat shrinkable tube 22 leaves the evacuation and seal-off portion 24 unaffected and the diameters of the passage 25 are as such original diameters d_{orig}. The passage 25 is then prepared and available for the later removal of air from the interior of the heat shrinkable tube 22.

Also when the heat shrinkable tube 22a has a tubular shape as illustrated in fig 7 , and the receiving portion 23a and the evacuation and seal-off portion 24 have been pretreated by expansion of the original inner diameters into expanded inner diameters dₑₓₚ, the passage 25a is kept open during shrinkage. The heat shrinkable tube 22a having a tubular shape will shrink similar to the heat shrinkable tube 22 of fig 9 . The inner surfaces 28 of the receiving portion 23a will be fitted onto the outer sleeve insulation assembly 13. In both the embodiments of the heat shrinkable tube as shown in fig 6 and 7 the passages 25, 25a are left open after the shrinkage is completed, and the shrinkage brings about a similarly shaped heat shrinkable tube.

The bottle shape of the heat shrinkable tube 22 as shown in 6 and 8, is advantageous in that the stepwise configuration restricts the axial displacement of the heat shrinkable tube.

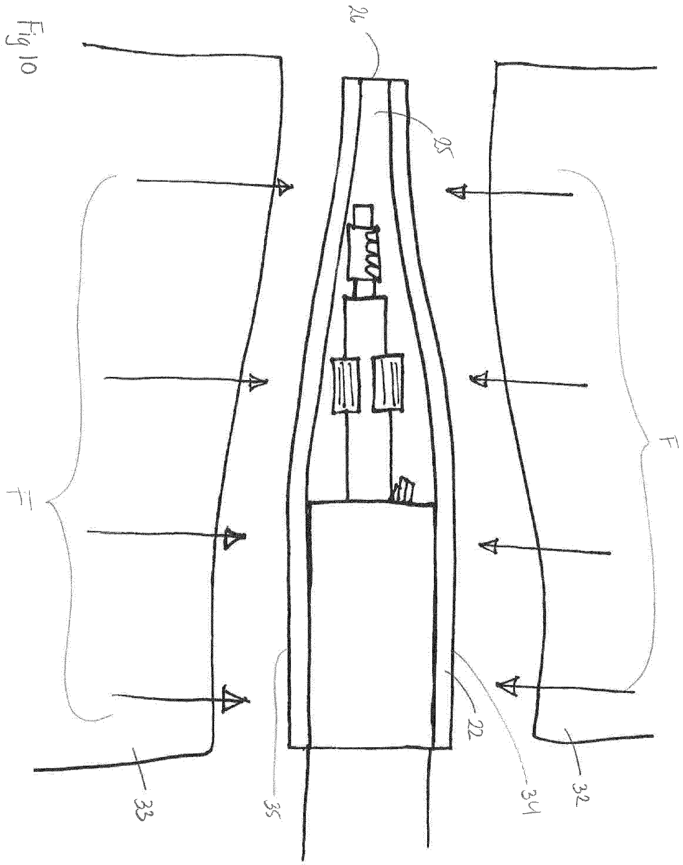

By exposure to the heat treatment H, the piece of hot melt adhesive 16 and the hot melt adhesive layer of the inner surfaces assume a melted form. The heated heat shrinkable tube 22, 22a is subsequently subjected to a pressure treatment as illustrated in fig 10 . A pressure force F has a working direction essentially radially on the heat shrinkable tube 22, 22a, and is distributed along the length of the heated heat shrinkable tube 22, 22a. The piece of hot melt adhesive 16 and the hot melt adhesive layer are in the melted form. The heat shrinkable tube is subjected to a pressure force F, as illustrated by the arrows F along the length of the heat shrinkable tube 22. As illustrated in fig 10, the pressure force F as working along the length of the heat shrinkable tube 22 is provided by a pressing tool comprising upper and lower tool halves 32, 33. These tool halves 32, 33 are arranged for engagement with opposite the exterior surfaces 34, 35 of the heat shrinkable tube 22 for the application of pressure force on the heat shrinkable tube.

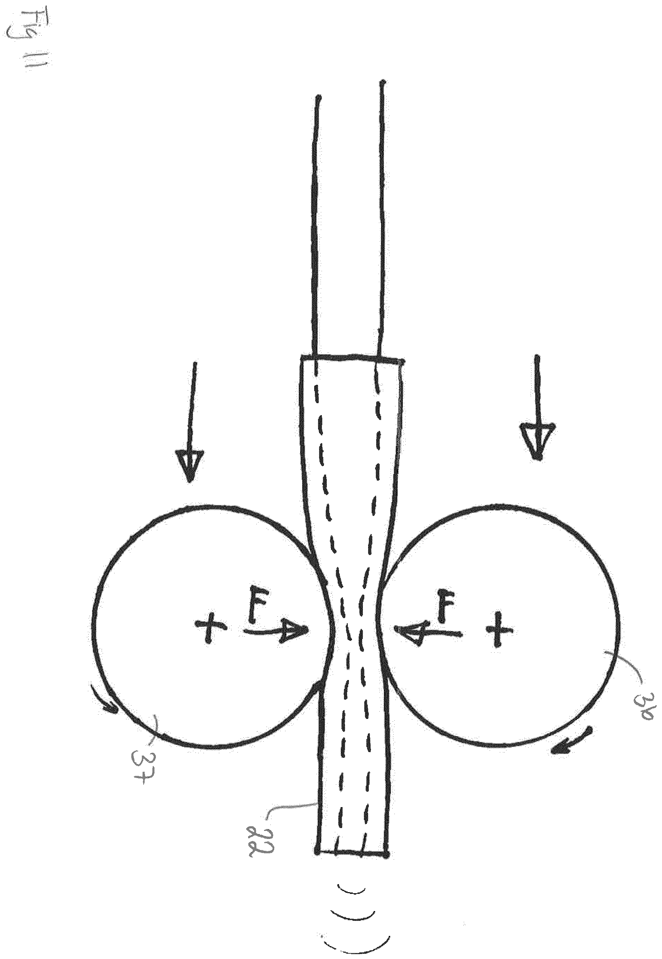

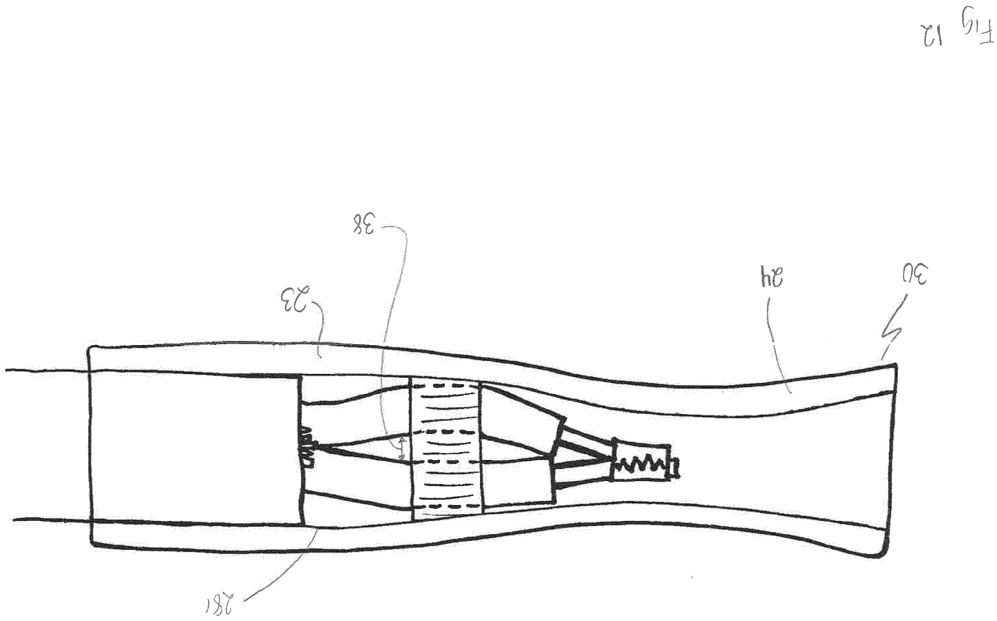

Fig 11 shows an embodiment where the pressing tool comprises rollers 36, 37 for providing a pressure force onto the heat shrinkable tube 22. The application of the pressure force F onto the heat shrinkable tube 22 causes the compression of the heat shrinkable tube 22. The compression lets out air interiorly from the heat shrinkable tube 22 and ensures adhesion within the interior of the heat shrinkable tube 22. During compression, air is evacuated out through the passage 25 of the evacuation and seal-off portion 24 and let out from the outlet opening 26. The melted piece of hot melt adhesive 16 ensures that the gap 38 between the conductors is filled, see fig 12 . The portion of the hot melt adhesive 16 adjacent the inner surfaces 228 fill out the space between the conductors and the inner surfaces 228.

The melted hot melt adhesive layer of the inner surface 228 adheres to one another and the conductors. The passage 25 is closed by the adhesion of the inner surfaces 28 of the passage, thereby closing the outlet opening 26 and sealing off the interior of the heat shrinkable tube 22 from its surroundings. By this installment, the interior of the heat shrinkable tube 22 is filled with adhesive and there is no path for water to enter the interior. The fill out of the melted piece of hot melt adhesive 16 in between the conductors and against the inner surfaces provides a water blockage or barricade preventing water entrance towards the bare tip portions of the conductors 9,10. And as such this blockage provides an additional safety measure should air get trapped in the interior after all.

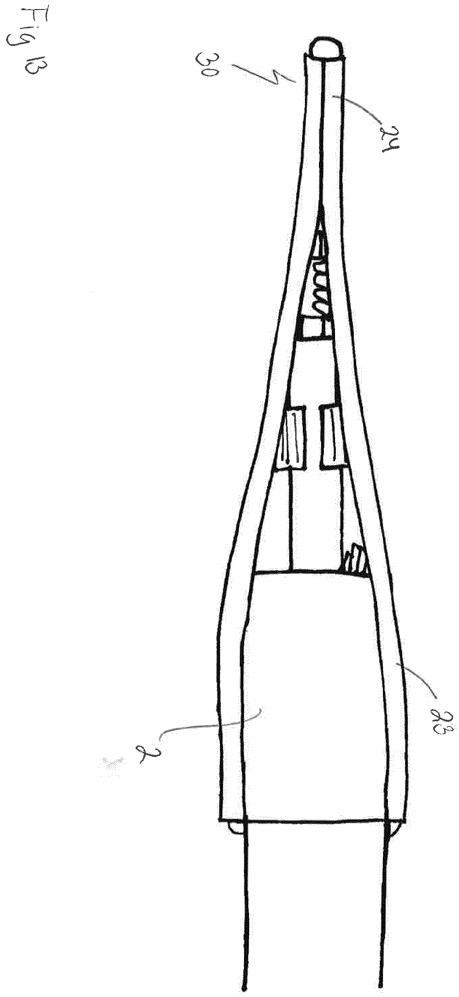

Figs 12 and 13 show the heat shrinkable tube 22 with the heating cable end portion installed, after the pressure treatment has been completed. As illustrated in the side view shown in fig 13 , the heat shrinkable tube 22 has a tapering shape and has been compressed into a flat configuration, where the evacuation and seal-off portion 24 appears as a protruded lip formation 30. The interior of the receiving portion 23, which is not occupied by the end portion 2, is filled with the adhesion.

## Claims

1. Method for installing an end cap arrangement (1) for sealing off an end portion (3) of a heating cable (2) comprising at least two conductors (4, 5) and an outer sleeve insulation assembly (13) covering said at least two conductors (4, 5), said at least two conductors (4, 5) being electrically connected, the end cap arrangement (1) comprises
- a heat shrinkable tube (22, 22a) having an entrance opening (30) and an outlet opening (26) for the evacuation of air, said heat shrinkable tube (22, 22a) comprising an evacuation and seal-off portion (24, 24a) having inner surfaces (28) defining a passage (25, 25a) for evacuation of air out through the outlet opening (26),
where method comprises the following steps;
- attaching at least one piece of hot melt adhesive (16) to the conductors,
- inserting the end portion (3) of the heating cable (2) through the entrance opening (30) into the interior of the heat shrinkable tube (22, 22a),
- exposing the heat shrinkable tube (22, 22a) to a shrinkage temperature tₛₕᵣᵢₙₖ so that the heat shrinkable tube (22, 22a) fits in engagement with the exterior of the outer sleeve assembly (13) while leaving open the passage (25, 25a),
- applying a subsequent pressure force (F) to the heat shrinkable tube (22, 22a) thereby
* letting air from the interior of the heat shrinkable tube (22, 22a ) and out the outlet opening (26),
* forming the heat shrinkable tube (22, 22a) about the heating cable end portion, and
* closing the outlet opening (26) by displacing the inner surfaces (28) of the passage (25, 25a) of the evacuation and seal-off portion (24, 24a) into engagement with each other and by the adhesion of the inner surfaces (28) of the passage (25, 25a)..

2. Method according to claim 1,
where the heat shrinkable tube (22, 22a) comprises an evacuation and seal-off portion (24, 24a) having inner surfaces (28) defining said passage (25) for evacuation of air out through the outlet opening (26), wherein the subsequent pressure force (F) allows the air evacuation and compression of the evacuation and seal-off portion (24, 24a) for closure of the passage (25) and the outlet opening (26).

3. Method according to claim 2,
where the compression of the evacuation and seal-off portion allows displacement of the inner surfaces (28, 28a) of the evacuation and seal-off portion (24, 24a) into sealed abutment with each other.

4. Method according to any one of the preceding claims, where the exposure to the shrinking temperature tₛₕᵣᵢₙₖ allows at least one piece of hot melt adhesive (16) into a melted adhesion, and the subsequent pressure force (F) allows filling gaps in the interior of the heat shrinkable tube (22, 22a) with melted adhesion.

5. Method according to one of the previous claims,
where the piece of hot melt adhesive (16) comprises a body member (17) of hot melt adhesive configured with at least one hot melt adhesive attachment portion (18, 19) configured for receiving the conductor (4, 5) in an installment position.

6. Method according to claim 5, where the body member (17) is centrally arranged between at least two hot melt adhesive attachment portions (18, 19), wherein each of the hot melt adhesive attachment portions (18, 19) is arranged for receiving the respective conductor in the installment position, and wherein the body member (17) has a radial extension configured for radial displacement of the conductors (4, 5) away from each other in the installment position.

7. Method according to one of the previous claims,
where the heat shrinkable tube (22, 22a) comprises a receiving portion arranged with the entrance opening (30) and inner surfaces (228, 228a) defining the interior of the receiving portion (23, 23a) , wherein the receiving portion (23, 23a) is prepared for shrinkage from expanded inner diameters d1ₑₓₚ, to original inner diameters d1_{orig} during exposure to the shrinking temperature tₛₕᵣᵢₙₖ , and the inner diameters d1_{orig} are configured for fitting the receiving portion (23, 23a) in engagement with an outer sleeve insulation assembly (13) of the heating cable end portion (3).

8. Method according to claim 7 and 2,
where the passage (25) of the evacuation and seal-off portion (24, 24a) extends from the interior of the receiving portion (23, 23a) to the outlet opening for evacuation of air from the interior of the receiving portion (23, 23a) .

9. Method according to one of the previous claims,
where the evacuation and seal-off portion (24a) of the heat shrinkable tube (22a) is prepared for shrinkage from expanded inner diameters d2ₑₓₚ, to original inner diameters d2_{orig} during exposure to the shrinking temperature tₛₕᵣᵢₙₖ , wherein the recovery of the original inner diameters d2_{orig} is configured to leave the passage (25) open for evacuation of air from (23, 23a) out the outlet opening (26).

10. Method according to one of the previous claims 1-8,
where prior to shrinkage, the receiving portion (23, 23a) comprises a first tubular section and the evacuation and seal-off portion (24, 24a) comprises a second tubular section, where the inner original diameter d2_{orig} of the evacuation and seal-off portion (24, 24a) is smaller than the expanded inner diameter d1ₑₓₚ of the receiving portion, and a merging tubular shoulder section (29) with an inner diameter d3_{orig} decreasing from the inner diameter of the first tubular section towards the inner diameter d2_{orig} of the second tubular section, connects the first and second tubular section.

11. Method according to one of the previous claims 1-8,
where prior to prior to shrinkage, the heat shrinkable tube (22a) has the configuration of a tube member, where the receiving portion (23a) comprises the one end portion (3) of the tube member and the evacuation and seal-off portion (24a) comprises the other end portion (3) of the tube member, where the expanded inner diameters (d1ₑₓₚ d2ₑₓₚ) of the receiving portion (23a) and the evacuation and seal-off portion (24a) is configured essentially uniform

12. Method according to one of the previous claims,
wherein the shrinkage and forming of the heat shrinkable tube (22, 22a) about the heating cable end portion (3), provides the receiving portion (23, 23a) with a flattened tapering configuration, and the evacuation and seal-off portion (24, 24a) projects from the receiving portion with the shape of a lip formation.

13. Method for installing an end cap arrangement (1) for sealing off an end portion (3) of a heating cable (2) in accordance with any one of the preceding claims, wherein the exposure to the shrinkage temperature tₛₕᵣᵢₙₖ and the subsequent pressure force (F) ensures the following steps:
- the melting of the least one piece of hot melt adhesive (16) into melted adhesive and filling the melted adhesive into gaps (38) between the conductors and between inner surfaces (228, 228a) of the heat shrinkable tube (22, 22a) and the conductors,
- closing the outlet opening.

## Patentansprüche

1. Verfahren zum Anbringen einer Endkappenanordnung (1) zum Verschließen eines Endabschnitts (3) eines Heizkabels (2), das mindestens zwei Leiter (4, 5) und eine äußere Isolierhülle (13) umfasst, die die genannten mindestens zwei Leiter (4, 5) bedeckt, wobei die genannten mindestens zwei Leiter (4, 5) elektrisch miteinander verbunden sind, wobei die Endkappenanordnung (1) Folgendes aufweist:
- ein wärmeschrumpfbarer Schlauch (22, 22a) mit einer Eintrittsöffnung (30) und einer Auslassöffnung (26) zur Evakuierung der Luft, wobei der wärmeschrumpfbare Schlauch (22, 22a) einen Evakuierungs- und Verschlussabschnitt (24, 24a) mit Innenflächen (28) aufweist, die einen Durchgang (25, 25a) zur Evakuierung der Luft durch die Auslassöffnung (26) bilden,
wobei das Verfahren die folgenden Schritte umfasst:
- das Anbringen von mindestens einem Stück Schmelzklebstoff (16) an den Leitern,
- das Einführen des Endabschnitts (3) des Heizkabels (2) durch die Eintrittsöffnung (30) in das Innere des wärmeschrumpfbaren Schlauchs (22, 22a),
- das Aussetzen des wärmeschrumpfbaren Schlauchs (22, 22a) der Schrumpftemperatur tₛₕᵣᵢₙₖ, sodass der wärmeschrumpfbare Schlauch (22, 22a) mit der Außenseite der äußeren Isolierhülle (13) in Eingriff passt, wobei der Durchgang (25, 25a) offen bleibt,
- das Ausüben einer anschließenden Druckkraft (F) auf den wärmeschrumpfbaren Schlauch (22, 22a), wodurch
* - das Entweichenlassen der Luft aus dem Inneren des wärmeschrumpfbaren Schlauchs (22, 22a) durch die Auslassöffnung (26),
* - das Formen des wärmeschrumpfbaren Schlauchs (22, 22a) um den Endabschnitt (3) des Heizkabels (2),
* - das Verschließen der Auslassöffnung (26) durch Verschieben der Innenflächen (28) des Durchgangs (25, 25a) des Evakuierungs- und Verschlussabschnitts (24, 24a) in dichte Auflage zueinander und durch das Verkleben der Innenflächen (28) des Durchgangs (25, 25a).

2. Verfahren nach Anspruch 1,
wobei der wärmeschrumpfbare Schlauch (22, 22a) einen Evakuierungs- und Verschlussabschnitt (24, 24a) aufweist, dessen Innenflächen (28) den genannten Durchgang (25) zur Evakuierung der Luft durch die Auslassöffnung (26) bilden, wobei die anschließende Druckkraft (F) die Entleerung der Luft und die Kompression des Evakuierungs- und Verschlussabschnitts (24, 24a) zum Verschluss des Durchgangs (25) und der Auslassöffnung (26) ermöglicht.

3. Verfahren nach Anspruch 2,
wobei die Kompression des Entlüftungs- und Absperrabschnitts eine Verschiebung der Innenflächen (28, 28a) des Entlüftungs- und Absperrabschnitts (24, 24a) in dichte Auflage zueinander ermöglicht.

4. Verfahren nach einem der vorstehenden Ansprüche, wobei die Einwirkung auf die Schrumpftemperatur tₛₕᵣᵢₙₖ wenigstens ein Stück Schmelzklebstoff (16) zum Schmelzen bringt, und die anschließende Druckkraft (F) ermöglicht das Ausfüllen von Hohlräumen im Inneren des wärmeschrumpfbaren Rohrs (22, 22a) mit geschmolzenem Klebstoff.

5. Verfahren nach einem der vorstehenden Ansprüche,
wobei das Stück Schmelzklebstoff (16) ein Körperteil (17) aus Schmelzklebstoff umfasst, das mit mindestens einem Schmelzklebstoff-Befestigungsabschnitt (18, 19) versehen ist, der zum Aufnehmen des Leiters (4, 5) in einer Einbaulage ausgebildet ist.

6. Verfahren nach Anspruch 5, wobei das Körperteil (17) zentral zwischen mindestens zwei Schmelzklebstoff-Befestigungsabschnitten (18, 19) angeordnet ist, wobei jeder der Schmelzklebstoff-Befestigungsabschnitte (18, 19) zum Aufnehmen des jeweiligen Leiters in der Einbaulage vorgesehen ist, und wobei das Körperteil (17) eine radiale Ausdehnung aufweist, die für die radiale Verdrängung der Leiter (4, 5) voneinander in der Einbaulage ausgelegt ist.

7. Verfahren nach einem der vorstehenden Ansprüche,
wobei das wärmeschrumpfbare Rohr (22, 22a) einen Aufnahmeabschnitt mit der Eintrittsöffnung (30) und Innenflächen (228, 228a) aufweist, die das Innere des Aufnahmeabschnitts (23, 23a) definieren, wobei der Aufnahmeabschnitt (23, 23a) zur Schrumpfung von erweiterten Innen-Durchmessern d lₑₓₚ auf ursprüngliche Innen-Durchmesser d1_{orig} bei Einwirkung der Schrumpftemperatur tₛₕᵣᵢₙₖ vorbereitet ist, und die Innen-Durchmesser d1_{orig} so ausgelegt sind, dass der Aufnahmeabschnitt (23, 23a) mit einer äußeren Isolierhülle (13) des Endabschnitts des Heizkabels (3) in Eingriff passt.

8. Verfahren nach Anspruch 7 und 2,
wobei der Durchgang (25) des Evakuierungs- und Verschlussabschnitts (24, 24a) vom Inneren des Aufnahmeabschnitts (23, 23a) bis zur Auslassöffnung zur Evakuierung der Luft aus dem Inneren des Aufnahmeabschnitts (23, 23a) verläuft.

9. Verfahren nach einem der vorstehenden Ansprüche,
wobei der Evakuierungs- und Verschlussabschnitt (24a) des wärmeschrumpfbaren Schlauchs (22a) zum Schrumpfen von den expandierten Innendurchmessern d2ₑₓₚ auf die ursprünglichen Innendurchmesser d2_{orig} bei Einwirkung der Schrumpftemperatur tₛₕᵣᵢₙₖ vorbereitet ist, wobei die Rückbildung auf die ursprünglichen Innendurchmesser d2_{orig} so ausgelegt ist, dass der Durchgang (25) zur Evakuierung der Luft aus (23, 23a) durch die Auslassöffnung (26) offen bleibt.

10. Verfahren nach einem der vorstehenden Ansprüche 1-8,
wobei vor dem Schrumpfen der Aufnahmeabschnitt (23, 23a) einen ersten Rohrabschnitt und der Evakuierungs- und Verschlussabschnitt (24, 24a) einen zweiten Rohrabschnitt aufweist, wobei der innere ursprüngliche Durchmesser d2_{orig} des Evakuierungs- und Verschlussabschnitts (24, 24a) kleiner ist als der expandierte Innendurchmesser d1ₑₓₚ des Aufnahmeabschnitts, und ein verbindender, rohrförmiger Schulterabschnitt (29) mit einem inneren Durchmesser d3_{orig}, der vom Innendurchmesser des ersten Rohrabschnitts zum Innendurchmesser d2_{orig} des zweiten Rohrabschnitts abnimmt, den ersten und den zweiten Rohrabschnitt verbindet.

11. Verfahren nach einem der vorstehenden Ansprüche 1-8,
wobei der wärmeschrumpfbare Schlauch (22a) vor dem Schrumpfen die Konfiguration eines Schlauchglieds aufweist, wobei der Aufnahmeabschnitt (23a) den einen Endabschnitt (3) des Schlauchglieds und der Evakuierungs- und Verschlussabschnitt (24a) den anderen Endabschnitt (3) des Schlauchglieds bildet, wobei die expandierten Innendurchmesser (d1ₑₓₚ d2ₑₓₚ) des Aufnahmeabschnitts (23a) und des Evakuierungs- und Verschlussabschnitts (24a) im Wesentlichen einheitlich ausgebildet sind

12. Verfahren nach einem der vorstehenden Ansprüche,
wobei das Schrumpfen und Formen des wärmeschrumpfbaren Schlauchs (22, 22a) um den Heizkabelendabschnitt (3) dem Aufnahmeabschnitt (23, 23a) eine abgeflachte, konisch zulaufende Form verleiht und der Evakuierungs- und Verschlussabschnitt (24, 24a) als lippenartige Ausbildung aus dem Aufnahmeabschnitt hervorragt.

13. Verfahren zum Anbringen einer Endkappenanordnung (1) zum Verschließen eines Endabschnitts (3) eines Heizkabels (2) gemäß einem der vorstehenden Ansprüche, wobei die Einwirkung der Schrumpftemperatur tₛₕᵣᵢₙₖ und die anschließende Druckkraft (F) die folgenden Schritte gewährleisten:
- das Schmelzen von mindestens einem Stück Schmelzklebstoff (16) zu geschmolzenem Klebstoff und das Einfüllen des geschmolzenen Klebstoffs in Hohlräume (38) zwischen den Leitern und zwischen den Innenflächen (228, 228a) des wärmeschrumpfbaren Schlauchs (22, 22a) und den Leitern,
- das Verschließen der Auslassöffnung.

## Revendications

1. Procédé d'installation d'un dispositif de capuchon d'extrémité (1) destiné à obturer une partie terminale (3) d'un câble chauffant (2) comprenant au moins deux conducteurs (4, 5) et un assemblage d'isolation de gaine extérieure (13) recouvrant lesdits conducteurs (4, 5), lesdits conducteurs (4, 5) étant électriquement connectés, le dispositif de capuchon d'extrémité (1) comprend
- un tube thermorétractable (22, 22a) ayant une ouverture d'entrée (30) et un orifice de sortie (26) pour l'évacuation de l'air, ledit tube thermorétractable (22, 22a) comprenant une partie d'évacuation et d'obturation (24, 24a) ayant des surfaces intérieures (28) définissant un passage (25, 25a) pour l'évacuation de l'air par l'orifice de sortie (26),
où le procédé comprend les étapes suivantes :
- fixer au moins une pièce d'adhésif thermofusible (16) aux conducteurs,
- insérer la partie terminale (3) du câble chauffant (2) à travers l'ouverture d'entrée (30) dans l'intérieur du tube thermorétractable (22, 22a),
- exposer le tube thermorétractable (22, 22a) à une température de rétrécissement tₛₕᵣᵢₙₖ de sorte que le tube thermorétractable (22, 22a) épouse l'extérieur de l'assemblage de gaine extérieure (13) tout en laissant ouvert le passage (25, 25a),
- appliquer une force de pression subséquente (F) au tube thermorétractable (22, 22a), de manière à
* - laisser l'air s'échapper de l'intérieur du tube thermorétractable (22, 22a) par l'orifice de sortie (26),
* - former le tube thermorétractable (22, 22a) autour de la partie terminale (3) du câble chauffant, et
* - fermer l'ouverture de sortie (26) en déplaçant les surfaces intérieures (28) du passage (25, 25a) de la partie d'évacuation et d'obturation (24, 24a) de façon à les mettre en engagement l'une avec l'autre et par l'adhésion des surfaces intérieures (28) du passage (25, 25a).

2. Procédé selon la revendication 1,
où le tube thermorétractable (22, 22a) comprend une portion d'évacuation et d'obturation (24, 24a) ayant des surfaces intérieures (28) délimitant ledit passage (25) pour l'évacuation de l'air vers l'extérieur par l'orifice de sortie (26), la force de pression subséquente (F) permettant l'évacuation de l'air et la compression de la portion d'évacuation et d'obturation (24, 24a) en vue de la fermeture du passage (25) et de l'orifice de sortie (26).

3. Procédé selon la revendication 2,
où la compression de la portion d'évacuation et d'obturation permet le déplacement des surfaces intérieures (28, 28a) de la portion d'évacuation et d'obturation (24, 24a) jusqu'à leur mise en appui étanche les unes contre les autres.

4. Procédé selon l'une des revendications précédentes, où l'exposition à la température de rétraction tₛₕᵣᵢₙₖ permet au moins à une pièce d'adhésif thermofusible (16) de fondre en un adhésif fondu, et la force de pression subséquente (F) permet de combler les vides à l'intérieur du tube thermorétractable (22, 22a) par l'adhésif fondu.

5. Procédé selon l'une des revendications précédentes,
où la pièce d'adhésif thermofusible (16) comprend un corps (17) d'adhésif thermofusible muni d'au moins une partie d'attache d'adhésif thermofusible (18, 19) destinée à recevoir le conducteur (4, 5) en position d'installation.

6. Procédé selon la revendication 5, où le corps (17) est disposé au centre entre au moins deux parties d'attache d'adhésif thermofusible (18, 19), chacune de ces parties d'attache (18, 19) étant prévue pour recevoir le conducteur correspondant en position d'installation, et où le corps (17) présente une extension radiale configurée pour l'écartement radial des conducteurs (4, 5) l'un par rapport à l'autre en position d'installation.

7. Procédé selon l'une des revendications précédentes,
où le tube thermorétractable (22, 22a) comprend une portion de réception munie de l'orifice d'entrée (30) et de surfaces intérieures (228, 228a) délimitant l'intérieur de la portion de réception (23, 23a), ladite portion de réception (23, 23a) étant destinée à se contracter depuis des diamètres intérieurs élargis d lₑₓₚ vers des diamètres intérieurs d'origine d1_{orig} lors de l'exposition à la température de rétraction tₛₕᵣᵢₙₖ, les diamètres intérieurs d1_{orig} étant configurés pour permettre l'ajustement de la portion de réception (23, 23a) en prise avec un ensemble d'isolation par manchon externe (13) de la partie terminale chauffante du câble (3) .

8. Procédé selon les revendications 7 et 2,
où le passage (25) de la partie d'évacuation et d'obturation (24, 24a) s'étend de l'intérieur de la partie réceptrice (23, 23a) jusqu'à l'orifice de sortie pour l'évacuation de l'air de l'intérieur de la partie réceptrice (23, 23a).

9. Procédé selon l'une des revendications précédentes,
où la partie d'évacuation et d'obturation (24a) du manchon thermorétractable (22a) est préparée pour se rétracter d'un diamètre intérieur expansé d2ₑₓₚ à un diamètre intérieur d'origine d2_{orig} lors de l'exposition à la température de rétraction tₛₕᵣᵢₙₖ, la reprise des diamètres intérieurs d'origine d2_{orig} étant configurée de manière à laisser le passage (25) ouvert pour l'évacuation de l'air de la portion réceptrice (23, 23a) vers l'orifice de sortie (26).

10. Procédé selon l'une des revendications précédentes 1 à 8,
où, avant rétraction, la partie réceptrice (23, 23a) comprend une première section tubulaire et la partie d'évacuation et d'obturation (24, 24a) comprend une seconde section tubulaire, le diamètre intérieur d'origine d2_{orig} de la partie d'évacuation et d'obturation (24, 24a) étant inférieur au diamètre intérieur expansé d1ₑₓₚ de la partie réceptrice, et une section d'épaulement tubulaire de jonction (29), dont le diamètre intérieur d3_{orig} décroît depuis le diamètre intérieur de la première section tubulaire vers le diamètre intérieur d2_{orig} de la seconde section tubulaire, qui relie la première et la seconde section tubulaire.

11. Procédé selon l'une des revendications précédentes 1 à 8,
où, avant le rétrécissement, le manchon thermorétractable (22a) présente la configuration d'une pièce tubulaire, la partie réceptrice (23a) comprenant une des extrémités (3) de la pièce tubulaire et la partie d'évacuation et d'obturation (24a) comprenant l'autre extrémité (3) de la pièce tubulaire, les diamètres intérieurs expansés (d1ₑₓₚ d2ₑₓₚ) de la partie réceptrice (23a) et de la partie d'évacuation et d'obturation (24a) étant configurés essentiellement de manière uniforme

12. Procédé selon l'une des revendications précédentes,
où le rétrécissement et la mise en forme du manchon thermorétractable (22, 22a) autour de la partie d'extrémité du câble chauffant (3) confèrent à la partie réceptrice (23, 23a) une configuration aplatie et effilée, et la partie d'évacuation et d'obturation (24, 24a) se projette depuis la partie réceptrice en forme de lèvre.

13. Procédé d'installation d'un dispositif de capuchon d'extrémité (1) destiné à obturer une partie terminale (3) d'un câble chauffant (2) selon l'une des revendications précédentes, dans lequel l'exposition à la température de rétraction tₛₕᵣᵢₙₖ et la force de pression subséquente (F) assurent les étapes suivantes :
- la fusion d'au moins une pièce d'adhésif thermofusible (16) en adhésif fondu et le remplissage de l'adhésif fondu dans les interstices (38) entre les conducteurs et entre les surfaces intérieures (228, 228a) du tube thermorétractable (22, 22a) et les conducteurs,
- la fermeture de l'orifice de sortie.
